(19)

Europäisches
Patentamt
European
Patent Office
Office européen
des brevets

(11) **EP 2 901 746 B1**

(12) **EUROPEAN PATENT SPECIFICATION**

(45) Date of publication and mention
of the grant of the patent:
**17.04.2019 Bulletin 2019/16**

(21) Application number: **13779412.9**

(22) Date of filing: **27.09.2013**

(51) Int Cl.:
*H04W 24/08* ^(2009.01)    *H04W 24/02* ^(2009.01)

(86) International application number:
**PCT/SE2013/051127**

(87) International publication number:
**WO 2014/051513 (03.04.2014 Gazette 2014/14)**

(54) **EVALUATION OF RADIO NETWORK PERFORMANCE**

AUSWERTUNG EINER FUNKNETZLEISTUNG

ÉVALUATION DE PERFORMANCE DE RÉSEAU RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 US 201261707490 P**

(43) Date of publication of application:
**05.08.2015 Bulletin 2015/32**

(73) Proprietor: **Telefonaktiebolaget LM Ericsson
(publ)
164 83 Stockholm (SE)**

(72) Inventors:
• **ELMDAHL, Per**
**S-582 47 Linköping (SE)**
• **AXELSSON, Samuel**
**S-589 33 Linköping (SE)**
• **AXÉN, Rasmus**
**S-583 36 Linköping (SE)**
• **GUNNARSSON, Fredrik**
**S-587 50 Linköping (SE)**

(74) Representative: **Ericsson
Patent Development
Torshamnsgatan 21-23
164 80 Stockholm (SE)**

(56) References cited:
**EP-A1- 1 768 291        EP-A2- 2 239 974
WO-A1-2012/095113    WO-A1-2012/116489**

• **HUAWEI: "Consideration on CP Solution of
Minimization of Drive Test", 3GPP DRAFT;
R2-096600 CONSIDERATION ON CP SOLUTION
OF MINIMIZATION OF DRIVE TEST, no. Jeju;
20091109, 11 September 2011 (2011-09-11),
XP050391157, [retrieved on 2009-11-03]**
• **NOKIA SIEMENS NETWORKS ET AL:
"Architectures comparison", 3GPP DRAFT;
R2-097020 MDT ARCHITECTURE COMPARISON,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, no. Jeju;
20091109, 9 November 2009 (2009-11-09),
XP050391392, [retrieved on 2009-11-03]**
• **"Management for Carrier Aggregation for LTE",
3GPP TSG SA WG5 (TELECOM MANAGEMENT)
MEETING,, no. 78, 22 August 2011 (2011-08-22),
pages 1-4, XP007922524,**
• **SA WG5: "New WID for Enhanced NM Centralised
Coverage and Capacity Optimisation", 3GPP
DRAFT; SP-120347_S5-121246 WID ENHANCED
CCO, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. TSG
SA, no. Ljubljana, Slovenia; 20120618 - 20120620,
12 June 2012 (2012-06-12), XP050647277,
[retrieved on 2012-06-12]**

EP 2 901 746 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical field</u>

The present disclosure relates generally to a network node of a radio network and an Operation and Maintenance, O&M, node, and methods therein, for evaluation of performance of the radio network in radio communication between wireless devices and the network node.

<u>Background</u>

In recent years, different types of radio networks have been developed to provide radio communication for various wireless devices in different areas. The radio networks are constantly improved to provide better capacity, quality and coverage to meet the demands from subscribers using services and increasingly advanced devices, such as smartphones and tablets, which often require considerable amounts of bandwidth and resources for data transport in the networks. Therefore, it is often a challenge to achieve good performance, e.g. in terms of high data throughput, low latency and low rate of dropped or lost data, in the radio communication between network nodes in the radio network and various wireless devices communicating with the network nodes over a wireless radio link.

In order to improve the performance of such radio communication, various radio resources can be configured for wireless devices in a way that makes the radio communication more efficient. For example, in radio networks operating according to Long Term Evolution, LTE, a feature know as Carrier Aggregation, CA, is defined by the third Generation Partnership Project, 3GPP, where multiple carriers are used simultaneously in radio communication with a wireless device, mainly to increase data throughput.

In the field of radio communication, the term "wireless device" is commonly used and will be used in this disclosure to represent any terminal or device capable of radio communication including receiving downlink signals transmitted from a serving network node and sending uplink signals to the network node. Throughout this disclosure, wireless device could e.g. be exchanged for User Equipment, UE, which is another common term in this field.

Further, the term "network node", also commonly referred to as a base station, radio node, e-nodeB, eNB, etc., represents any radio access node in a radio network that can communicate uplink and downlink radio signals with wireless devices. The radio network may also be referred to as a cellular network for radio communication. The network node described in this disclosure may, without limitation, comprise a macro node or a low power node such as a micro, pico, femto, Wifi or relay node, to mention some customary examples. Throughout this disclosure, network node could e.g. be exchanged for base station.

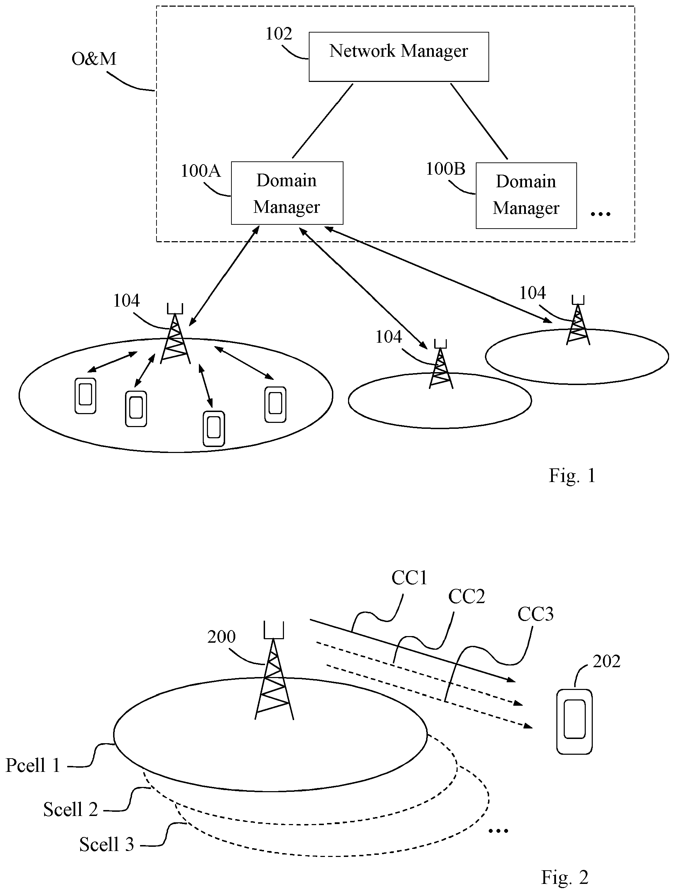

A radio network is typically supported and controlled by a network management system referred to as Operation and Maintenance, O&M, which may include various entities and nodes. A simplified example of a typical architecture for such a network management system is schematically illustrated in Fig. 1. In this figure, an O&M layer is indicated by a dashed box containing O&M nodes that observe how the radio network operates in radio communication with wireless devices, and also configure the radio network to operate with sufficiently high performance. The O&M layer may comprise a plurality of domain managers 100A, 100B ..., each being connected to and communicating with a set of base stations 104 of a particular domain.

In this example, only three base stations, or network nodes, 104 are shown connected to the domain manager 100A for simplicity, although a much greater number of network nodes may in practice be connected to each domain manager. The domain managers 100A, 100B ... are in turn connected to a central network manager 102 which basically coordinates evaluation, operation and configuration of the radio network, which is well-known in this field. The network nodes 104 may perform performance measurements and report information about measurement results to its respective domain managers, which in turn determine how the network nodes should be configured, or re-configured, e.g. in order to improve the performance, based on the reported measurements. An example is to configure the network nodes to apply carrier aggregation depending on their reported performance information.

In order to improve or maintain performance in a radio network, measurements of performance is obtained from the radio network on a more or less continuous basis, e.g. in order to detect and analyze any changes of performance occurring in the radio network. Such measurements may be obtained and provided from base stations and/or other nodes in the network. As said above, it is of great importance that performance is maintained at a sufficiently high level which may be achieved e.g. by employing CA with radio resources in multiple carriers, whenever suitable and effective.

However, it is often difficult to know how efficient and helpful a particular configuration of radio resources really is for the network performance when CA is applied, since many factors, apart from the resource configuration itself, may impact the achieved performance at the same time. Therefore, it may not be possible to decide whether a measured or otherwise detected performance improvement is the result of an applied CA resource configuration or not, or how much impact the CA resource configuration has had on the performance, and so forth. It is thus a problem to make a useful and reliable evaluation of the performance in view of the utilization of a CA resource configuration in radio communication between wireless devices and a network node.

Document WO 2012/095113 A1 may be construed to disclose measures for terminal measurement configuration in carrier aggregation, said measures comprising a configuration of one or more carriers for automatic terminal measurements relating to network performance on said one or more carriers, said one or more carriers being carriers in a carrier aggregation for one or more terminals, wherein said configuration may be dependent on the one or more terminals' capabilities in terms of single- or multi-carrier terminal measurements. According to such configuration, automatic terminal measurements may be performed simultaneously on the configured one or more carriers or on the configured one or more carriers based on a predetermined priority of each carrier. Said measures may exemplarily be applied for in an MDT context.

Document "Consideration on CP Solution of Minimization of Drive Test", Huawei, 3GPP draft R2-096600, may be construed to disclose a technique pertaining to i) Immediate reporting: the UE will report immediately at the end of the collection period the measurements to the connected eNB through RRC whenever UE is in active mode (collection period = reporting period), and ii) logging and reporting: the UE performs separate measurement collection and reporting to eNB. The time interval for measurement collection and reporting can be separately configurable in order to limit the impact on the UE battery consumption and the network signalling load.

Document "Architectures comparison", Nokia Siemens Networks et.al., 3GPP draft R2-097020, may be construed to disclose a technique pertaining to MDT architecture considerations on: measurement configuration, number of UEs available, measurement reporting, UE battery impact, Usability of MDT measurements for SON, NW impact, UE complexity and Impact of Roaming terminals, MVNO and Network sharing.

Document EP 2 239 974 A2 may be construed to disclose a method for reducing traffic load of multiple N carriers, comprising measuring the CS and PS traffic load both in downlink and uplink, evaluating the suitability of carrying the measured traffic load values in N-1 carriers and reconfiguring the traffic load from one of the N carriers towards the other N-1 carriers. For evaluation of the suitability of carrying the traffic load in N-1 carriers, the traffic with a SPI is associated with a label indicating a degree of vulnerability of said traffic to its transmission in case that at least one of the N carriers is switched off. An alternative scheduling priority indicator (SPI') is assigned to said traffic in accordance to its SPI and label. The alternative scheduling priority indicator (SPI') can be used by a RNC for triggering a HSPA scheduler in a Node B to schedule the traffic.

Document "Management for Carrier Aggregation for LTE", 3GPP TSG SA WG5 meeting no. 78, may be construed to disclose a technique pertaining to identifying required performance measurements and KPIs to support CA management, specifying required configurations for CA management, identifying the use cases and requirements for SON functionality, Self-establishment of eNodeB, E-UTRAN ANR, MRO, MLB, CCO and Self-healing in CA, and provide solutions, identifying the use cases and requirements for Energy Saving in CA and provide solution extensions, and addressing other management aspects for CA.

Summary

It is an object of embodiments described herein to address at least some of the problems and issues outlined above. It is possible to achieve this object and others by using a network node and an O&M node, and methods therein, as defined in the attached independent claims.

According to the present invention, there are provided apparatuses and methods according to the independent claims. Developments are set forth in the dependent claims.

According to one aspect, a method is provided in a network node of a radio network, for supporting evaluation of performance of the radio network in radio communication between wireless devices and the network node. The network node employs carrier aggregation with multiple carriers used in corresponding multiple cells, when serving at least some of the wireless devices. In this method, the network node retrieves statistical information regarding utilization of radio resources in the radio communication, wherein the statistical information indicates secondary cell use of radio resources in a particular cell in the radio communication. The network node further reports the statistical information to an O&M node which is serving the radio network. Thereby, the O&M node is enabled to use the statistical information for evaluating how a measured performance of the radio network is related to secondary cell usage. The O&M node may further configure radio resources for the network node based on this evaluation.

According to another aspect, a network node of a radio network is arranged for supporting evaluation of performance of the radio network in radio communication between wireless devices and the network node when employing carrier aggregation with multiple carriers used in corresponding multiple cells. The network node comprises a processing unit that is configured to retrieve statistical information regarding utilization of radio resources in the radio communication, wherein the statistical information indicates secondary cell use of radio resources in a particular cell in the radio communication. The network node also comprises a communication circuitry that is configured to report the statistical information to an O&M node serving the radio network, thereby enabling the O&M node to use the statistical information for evaluating how a measured performance of the radio network is related to secondary cell usage.

According to another aspect, a method is provided in an O&M node serving a radio network, for evaluating performance of the radio network in radio communication between wireless devices and a network node of the radio network. The network node employs carrier aggregation with multiple carriers used in corresponding multiple cells. In this method, the O&M node obtains a measured performance of the radio network, and it also receives statistical information from the network node regarding utilization of radio resources in the radio communication. The statistical information indicates secondary cell use of radio resources in a particular cell in the radio communication, which may be indicated explicitly or implicitly in the received statistical information. The O&M node further uses the statistical information for performing evaluation of how the measured performance of the radio network is related to secondary cell usage. Then, the O&M node is able to configure radio resources for the network node based on said evaluation.

According to yet another aspect, an O&M node is arranged for serving a radio network and for evaluating performance of the radio network in radio communication between wireless devices and a network node of the radio network. It is assumed that the network node employs carrier aggregation with multiple carriers used in corresponding multiple cells.

The O&M node comprises an obtaining unit that is arranged to obtain a measured performance of the radio network. The O&M node also comprises a communication circuitry that is arranged to receive statistical information from the network node regarding utilization of radio resources in the radio communication, wherein the statistical information indicates secondary cell use of radio resources in a particular cell in the radio communication. The O&M node further comprises a logic unit that is arranged to use the statistical information for performing evaluation of how the measured performance of the radio network is related to secondary cell usage, and a configuring unit that is arranged to configure radio resources for the network node based on said evaluation.

The above methods and nodes may be configured and implemented according to different optional embodiments to accomplish further features and benefits, to be described below.

Brief description of drawings

The solution will now be described in more detail by means of exemplary embodiments and with reference to the accompanying drawings, in which:

Fig. 1 is a communication scenario illustrating an architecture for network management, in which the embodiments described herein may be used.

Fig. 2 is a schematic view of a network node using carrier aggregation in radio communication with a wireless device, wherein some embodiments described herein may be used in the network node.

Fig. 3 is a flow chart illustrating a procedure in a network node, according to some possible embodiments.

Fig. 4 is a communication scenario illustrating an example of actions and signal flows when the solution is employed in a network node and an O&M node, according to further possible embodiments.

Fig. 5 is a schematic view of a data flow through a network node using carrier aggregation for a wireless device, when some embodiments described herein are employed in the network node.

Fig. 6 is a block diagram illustrating a network node in more detail, according to further possible embodiments.

Fig. 7 is a flow chart illustrating a procedure in an O&M node, according to further possible embodiments.

Fig. 8 is a block diagram illustrating an O&M node in more detail, according to further possible embodiments.

Detailed description

Briefly described, a solution is provided in a network node and in an O&M node, that can be used basically to achieve relevant and reliable evaluation of the performance of a radio network when carrier aggregation is employed, and particularly to assess how utilization of radio resources for Secondary cell, Scell, traffic in carrier aggregation impacts the performance for wireless devices communicating with the network node. It is then possible to e.g. estimate how efficient the use of carrier aggregation in the network node is for improving the performance in the network, and this knowledge may in turn be utilized by the O&M node for configuring radio resources for the network node.

In carrier aggregation, a network node such as a base station or the equivalent is able to communicate radio signals with a wireless device simultaneously over two or more different carriers, sometimes referred to as Component

**EP 2 901 746 B1**

Carriers, CC, corresponding to multiple cells serving the wireless device, which is illustrated by an example in Fig. 2. In this example, a network node 200 sends downlink signals to a wireless device 202 over three different carriers CC1, CC2 and CC3 which in turn provide coverage in three corresponding cells. It should be noted that the configuration with three carriers and corresponding cells shown in Fig. 2 is just an illustrative example, and any number of carriers and cells may be employed for the carrier aggregation.

When serving the wireless device 202 with the carriers CC1, CC2 and CC3, one of the cells is appointed to act as a Primary cell, Pcell, in this example Pcell 1 which is served by a carrier CC1. The other two cells are appointed to act as Secondary cells, Scells, in this example Scell 2 and Scell 3 which are served by carriers CC2 and CC3, respectively. In this field of technology, a Pcell is defined as the "main" cell serving the wireless device such that both data and control signaling can be transmitted over the Pcell, while an Scell is defined as a supplementary cell that is typically used for transmitting data only, the Scell thus adding extra bandwidth to enable greater data throughput.

The above is applicable for both downlink and uplink signals. Further, the appointment of a Pcell and one or more Scells is made per device such that a particular carrier may be used in a Pcell for one wireless device and in an Scell for another wireless device. For example in Fig. 2, the carrier CC1 which is used for serving the device 202 in a Pcell could at the same time be used for serving another device in an Scell, not shown. Similarly, the carrier CC2, or CC3, which is used for serving the device 202 in an Scell could at the same time be used for serving another device in a Pcell, not shown.

Carrier aggregation may thus be used in radio communication with a wireless device to support wider transmission bandwidths. The wireless device must have reception and/or transmission capabilities for carrier aggregation such that it can simultaneously receive and/or transmit on multiple carriers, which is the case for devices configured according to the third Generation Partnership Project, 3GPP, Rel-10 or later. In this way, the network node is able to serve a wireless device in several cells with basically the same coverage area as shown in Fig. 2, or with different coverage areas, at different carrier frequencies. Further, it is possible to configure the wireless device to aggregate a different number of carriers in the uplink than in the downlink, still originating from the same network node, thus enabling different bandwidths in uplink and downlink. The maximum number of downlink carriers that can be configured for a wireless device depends on the downlink aggregation capability of the device and of the network node. Similarly, the maximum number of uplink carriers that can be configured depends on the uplink aggregation capability of the device and of the network node.

In this solution, it has been realized that it is beneficial to evaluate a measured performance of a radio network in relation to utilization of radio resources for Scell traffic, or the Scell resource utilization and/or Pcell resource utilization relative to the total resource utilization, in a particular cell when carrier aggregation is employed. As explained above, a cell served by a certain carrier can act as a Pcell to some devices and as an Scell to others. Thereby, it is possible to understand whether carrier aggregation, as implied by the amount of Scell use of radio resources in each particular cell, has been efficient for improving the performance or not. It has also been realized that conventional procedures for measuring network performance and utilization of radio resources are not very useful for achieving a relevant and reliable evaluation of the performance due to a mismatch between determined resource utilization and the measured network performance, which will be explained in more detail below.

Radio network management is partly based on an understanding of the performance of the network equipment. For example, if some part of the network equipment indicates signs of overload, then such issues can be overcome on short term by offloading traffic to other parts of the network equipment, and on long term by evolving the network by deploying additional resources and radio network features such as carrier aggregation. In such mechanisms it can be useful to have an understanding of the load and performance of a network node, and a cell served by the network node.

A useful performance indicator in this context is data throughput in a cell or network node, typically over a given time period, or time window, although other performance indicators may also be used. In practice, the data throughput is beneficially determined or measured at Internet Protocol, IP, level in the network node, since it is carrying the application layer data, that is data being useful for services. In an exemplifying radio access technology of E-UTRAN, the data throughput can be measured at the Packet Data Control Protocol, PDCP, layer, and the IP data throughput can be determined in a similar way in other radio access technologies.

Another performance related indicator is related to the utilization of radio resources, i.e. to what extent the available radio resources are used for transmission and/or reception in a cell, or in a network node. In E-UTRAN, this may be measured as the fraction or percentage of used Physical Resource Blocks, PRBs, relative to the total amount of available PRBs in the cell.

Both these two measurable metrics or indicators, referred to as "observables", can provide information about performance and resource utilization. Another possibility is to enable a rough estimation of spectrum efficiency by dividing the throughput by the radio resource utilization, i.e. a measured throughput per radio resource. This can be used to assess how efficient a cell or base station is at delivering data to wireless devices being served. Cells with high spectrum efficiency can be considered to be successful at delivering data, while cells with low spectrum efficiency can be identified as cells that need to be analyzed further to discover whether something is wrong with the cell or network node and how

5

this shortcoming may be alleviated.

When introducing a new radio network feature such as carrier aggregation, it would be useful for the network operator to be able to monitor the impact and benefit of the new feature, e.g. to see whether the throughput is improved, the spectrum efficiency increases, or how the radio resource utilization changes in one way or the other. For example, a new radio network feature is deployed in one part of the network, and then the resulting benefits may be evaluated. This evaluation can enable the operator to better understand what cells or network nodes to first upgrade with the feature. The evaluation can also be seen as an evaluation of the new feature as such, i.e. whether the feature provides the intended improvement or not.

When carrier aggregation is introduced, it enables network nodes to allocate radio resources for a wireless device at two or more carriers with one cell acting as the PCell and one or more other cells acting as SCells, as described above. Thereby, the peak throughput of individual wireless devices increases, since they can be assigned radio resources in different carriers of multiple cells and thus obtain greater bandwidth. However, the PDCP is common to all allocated carriers used for a particular wireless device, and the PDCP throughput is conventionally associated only to the cell that acts as a PCell towards the respective wireless device. As a result, the Scells will appear to have zero throughput for this particular wireless device as all the data throughput measured in the network node for the device will be ascribed to the Pcell, while the measured resource utilization is ascribed to the Pcell and the Scells individually according to conventional procedure. There is thus a mismatch between measured throughput and measured resource utilization when carrier aggregation is employed.

Introducing carrier aggregation without changing the procedure of measuring performance and radio resource utilization will therefore lead to confusion and potentially incorrect or improper configuration decisions by operators. One reason is that in carrier aggregation neither the throughput nor the radio resource utilization are representative for a specific cell, i.e. a Pcell or an Scell. For example, consider two cells served by a network node and a case when one cell is only acting as SCell towards all served wireless devices and the other cell acts as PCell towards the devices. In conventional procedures, this means that both cells will report utilization of radio resources, but only one of them will report data throughput at IP level which is thus ascribed to the Pcell. As a result, the PCell can therefore be considered very efficient, while the SCell appears to be highly inefficient and may be even marked as a potentially malfunctioning cell. The observing ability has become skewed and misleading because of the introduction of carrier aggregation.

In this solution, a new procedure of monitoring from the network node for each cell is introduced such that it will be possible to match radio resource utilization with throughput more accurately. Thereby, it will be possible to understand to what extent radio resources in a particular cell are actually useful to provide IP throughput that is ascribed to other cells. In conventional procedures, only the total radio resource utilization is reported from each network node. In embodiments described herein, the network node additionally reports the amount of radio resources utilized when the cell acts as an SCell, i.e. when providing SCell traffic. Some examples of embodiments useful to achieve this, will be described below.

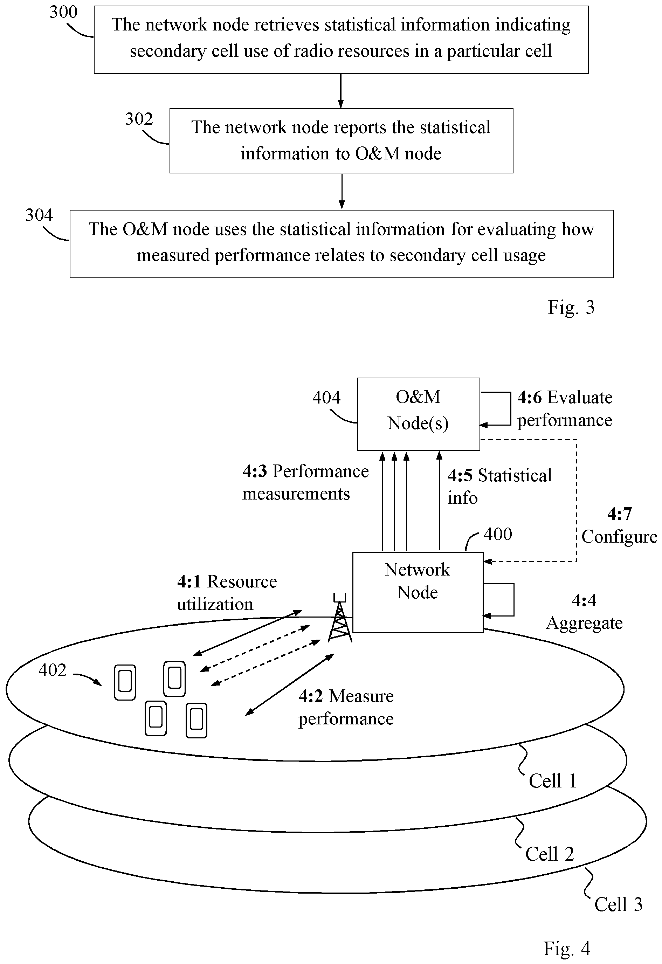

An example of how a network node may operate to support evaluation of performance of the radio network in radio communication between wireless devices and the network node according to some possible embodiments, will now be described with reference to the flow chart in Fig. 3. It is assumed that the network node employs carrier aggregation with multiple carriers used in corresponding multiple cells. The cells served by the network node may have more or less overlapping coverage areas or different coverage areas, and the solution is not limited in this respect. As described above, each of the multiple carriers may be used for Pcell traffic and/or Scell traffic. It is also assumed that the network node is connected to and managed by an O&M node which may correspond to a similar arrangement as illustrated in Fig. 1. The network node may be a base station or other similar node capable of radio communication with wireless devices. The procedure in Fig. 3 may be implemented by means of various functional units or entities in the network node which will be outlined in more detail later below in some possible examples.

A first **action 300** illustrates that the network node retrieves statistical information regarding utilization of radio resources in the radio communication, wherein the statistical information indicates secondary cell use of radio resources in a particular cell in the radio communication. In other words, the statistical information indicates the amount of radio resources that is utilized for Scell traffic in that cell, i.e. how much of the total traffic occurs in that cell when acting as an Scell.

In different possible embodiments, the retrieved statistical information may indicate an amount of radio resources utilized for Scell traffic out of a total amount of available radio resources, which is an explicit indication of the resource utilization for Scell traffic, or it may indicate an amount of radio resources utilized for Pcell traffic out of the total amount of available radio resources, which is an implicit indication of the resource utilization for Scell traffic since it can be deduced that the total resource amount minus the Pcell resource amount is the resource amount utilized for Scell traffic. It is also possible that the retrieved statistical information indicates a percentage of radio resources utilized for Scell traffic relative a total amount of available radio resources, or a ratio between an amount of radio resources utilized for Scell traffic and an amount of radio resources utilized for Pcell traffic. Any of the above alternatives can thus be used to indicate, explicitly or implicitly, secondary cell use of radio resources in the particular cell, although the solution is not limited to these examples.

In another possible embodiment, the statistical information related to carrier aggregation may indicate the utilization of radio resources separately for different Quality of Service, QoS, classes. For example, it is known a procedure for calculating PRB usage per QoS class on the Medium Access Control, MAC, protocol layer, which will be described further below. In yet another possible embodiment, the network node may retrieve the statistical information for uplink communication and downlink communication separately, i.e. to indicate the secondary cell use of radio resources in the cell on the uplink and on the downlink, respectively. Further, the network node may retrieve the statistical information from a scheduling entity associated with the network node, where the scheduling entity may be implemented in the network node or in another node controlling the radio communication to and from the network node.

In further possible embodiments, the network node may aggregate the statistical information over a time period by determining at least one of: a mean value, a median value, a maximum value, a minimum value, and a standard deviation, of the amount or percentage of radio resources utilized for Scell traffic over the time period.

Returning to Fig. 3, a next **action 302** illustrates that the network node reports the statistical information to the O&M node serving the radio network. Thereby, the O&M node is enabled to use the statistical information for evaluating how a measured performance of the radio network is related to secondary cell usage, which is shown by another **action 304**. In particular, the O&M node is able to determine how efficient the secondary cell use of radio resources in the particular cell is and how it affects the measured performance.

It will be described in more detail later below how the O&M node may operate to evaluate the performance of the radio network in this context when receiving the statistical information from the network node. The performance of the radio network may be measured in different ways. It was mentioned above that throughput is one example of a measurable performance metric that may be used in this context. Other useful examples of measurements that can be obtained from network nodes include:

- Average downlink cell bit rate at the protocol layer of PDCP, where the PDCP bit rate may be an average for all wireless devices, possibly grouped by a QoS class indicator and also over a certain time window.

- Average uplink cell PDCP bit rate, where the PDCP bit rate may be an average for all wireless devices, possibly grouped by a QoS class indicator and also over a certain time window.

- Average uplink and/or downlink PDCP delay.

- Average uplink and/or downlink PDCP drop rate.

- IP packet latency.

- IP packet throughput in downlink and /or uplink.

The above procedure in Fig. 3 is also illustrated by an exemplifying scenario in Fig. 4 which shows different actions and signaling flows involving a network node 400 and an O&M node 404 of a radio network, which may be used when implementing the solution in practice. The network node 400 employs carrier aggregation with multiple carriers used in corresponding multiple cells 1, 2 and 3 which may act as Pcell and/or Scell for different wireless devices 402 in the manner described above, which is similar to the scenario of Fig. 2.

A first **action 4:1** illustrates schematically that the network node 400 retrieves statistical information indicating resource usage for Scell traffic, which may be indicated explicitly or implicitly. Examples of what such statistical information may indicate in more detail have been described above. At the same time, more or less, the network node 400 also performs, or otherwise obtains, measurements of performance of the radio network, shown as another **action 4:2**. These performance measurements are reported from the network node 400 to the O&M node 404 in another **action 4:3**.

The network node 400 further aggregates the retrieved statistical information as shown by an **action 4:4**. Examples of how the statistical information may be aggregated have also been described above. An **action 4:5** illustrates that the network node 400 reports the statistical information to the O&M node 404. It should be noted that actions 4:1, 4:4 and 4:5 of retrieving statistical information and reporting it to the O&M node 404 may be performed on a more or less continuous basis. Likewise, actions 4:2 and 4:3 of measuring performance of the radio network and reporting the measurements to the O&M node 404 may be performed on a more or less continuous basis as well, and also in parallel with actions 4:1, 4:4 and 4:5. The actions 4:1 - 4:5 may thus be performed in any suitable order and/or more or less continuously.

Another **action 4:6** illustrates that the O&M node 404 uses the statistical information for performing evaluation of how a measured performance of the radio network is related to secondary cell usage. For example, the O&M node 404 may configure radio resources for Pcell traffic and/or Scell traffic in the individual cells served by the network node, based on said evaluation. A final shown **action 4:7** illustrates that the O&M node 404 may configure such radio resources in the network node 400.

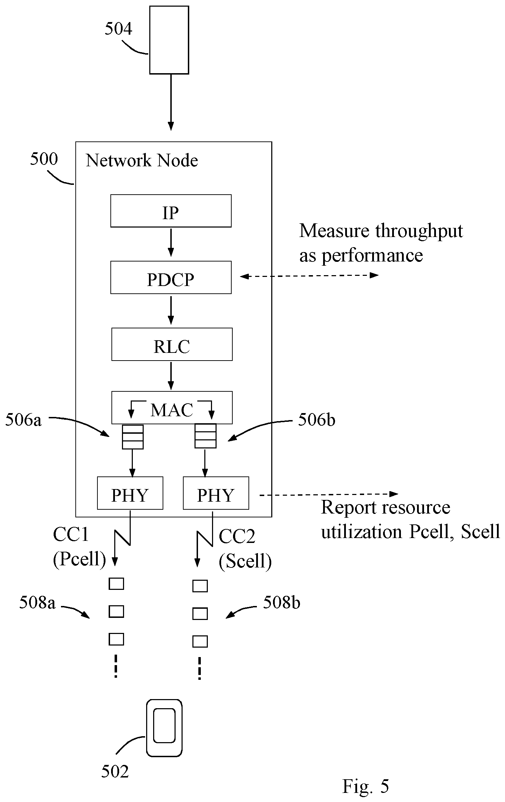

Fig. 5 illustrates an example of a data flow through a network node 500 of a radio network when carrier aggregation is employed involving two different carriers CC1 and CC2 which are used to transmit radio signals to a wireless device 502 on a Pcell and on an Scell, respectively, in a radio communication. In this example, an outgoing data packet 504 arrives at the network node 500 to be transmitted to the device 502 in the radio communication. The arriving data packet 504 is first processed in the network node 500 at an IP layer and then at a PDCP layer. At the PDCP layer, the data throughput can be measured and reported to an O&M node, not shown here, as an indicator of performance of the radio network, as schematically indicated by a dashed two-way arrow, which is a known practical procedure as such for monitoring the network performance.

According to regular procedures, the packet propagated through the network node 500 is further processed at a Radio Link Control, RLC, protocol layer and then at a MAC protocol layer. It should be noted that the packet 504 at the PDCP layer is divided into several smaller packets at the MAC protocol layer, in a conventional manner, and each packet at MAC layer may comprise parts of several packets of the PDCP layer, which makes it difficult, or even impossible, to trace resource utilization at MAC layer to individual packets at PDCP layer. At the MAC protocol layer, data in the packet is thus divided into smaller chunks of data which are queued in two different buffers 506a and 506b before the data is scheduled on radio resources for transmission over the Physical, PHY, layer using the carriers CC1 and CC2, respectively. Similar to what has been explained above, the carriers CC1 and CC2 are used to serve wireless devices in corresponding cells which may act as a Pcell or as an Scell in the radio communication with each wireless device. Data from the buffers 506a, 506b may thus be transmitted in separate successive PRBs and a series of PRBs 508a is shown transmitted on carrier CC1 while another series of PRBs 508b is shown transmitted on carrier CC2, both to be received by the device 502.

At the MAC layer or physical layer, the amount of radio resources scheduled on the carrier CC2 that is currently used for Scell traffic to the device can be measured, aggregated and reported as statistical information to the O&M node, not shown, to provide an indicator of secondary cell use of radio resources in the cell corresponding to the carrier CC2, as schematically indicated by a dashed one-way arrow. The amount of radio resources scheduled on the carrier CC2 may be measured and indicated explicitly or implicitly according to any of the alternatives described above. Thereby, the O&M node is enabled to evaluate how the measured performance of the radio network, data throughput in this case, is related to secondary cell usage which is indicated by the reported statistical information.

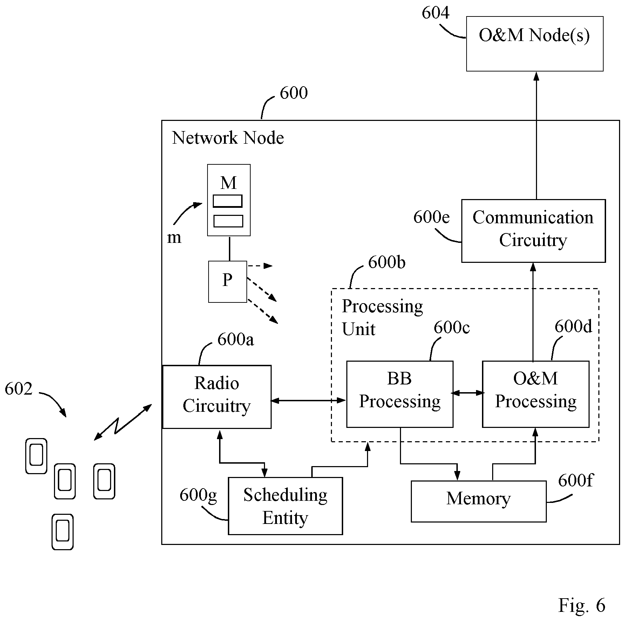

A detailed but non-limiting example of how a network node of a radio network may be structured with some possible functional units to bring about the above-described operation of the network node, is illustrated by the block diagram in Fig. 6. In this figure, the network node 600 is arranged for supporting evaluation of performance of the radio network in radio communication between wireless devices 602 and the network node. Again, it is assumed that the network node 600 employs carrier aggregation with multiple carriers used in corresponding multiple cells. The network node 600 may be configured to operate according to any of the examples and embodiments of employing the solution as described above and as follows.

The network node 600 comprises a suitable **radio circuitry 600a** for conducting radio communication with the wireless devices 602 which may be done in a conventional manner. The network node 600 also comprises a **processing unit 600b** configured to retrieve statistical information regarding utilization of radio resources in the radio communication, e.g. as described for action 300 above. The retrieved statistical information indicates secondary cell use of radio resources in a particular cell in the radio communication.

In a practical implementation, the processing unit 600b may contain a unit for Base Band, BB, processing 600c for processing signals to and from the radio circuitry 600a, and a unit for O&M processing 600d that can be used for processing and preparing the statistical information before it is reported to an O&M node 604 serving the radio network. The processing unit 600b may retrieve the statistical information from a **scheduling entity 600g** associated with the network node, and the statistical information may further be collected in a **memory 600f** connected to the BB processing unit 600c and to the O&M processing unit 600d.

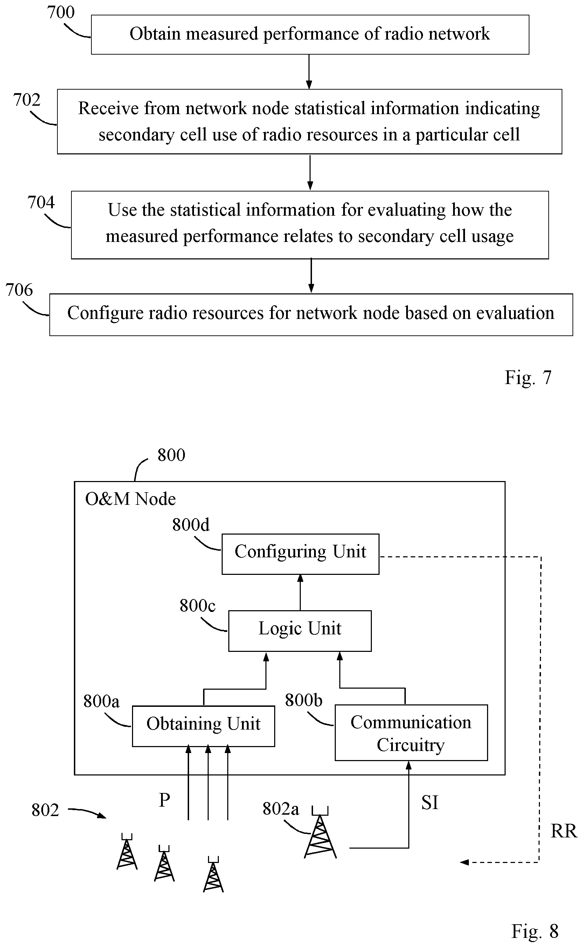

The network node 600 also comprises a **communication circuitry 600e** configured to report the statistical information to the O&M node 604, thereby enabling the O&M node to use the statistical information for evaluating how a measured performance of the radio network is related to secondary cell usage. A more detailed description of how the O&M node 604 may operate will be given below with reference to Figs 7 and 8.

The above network node 600 and its functional units may be configured or arranged to operate according to various optional embodiments. In a possible embodiment, the processing unit 600b may be configured to retrieve the statistical information for uplink communication and downlink communication separately. The processing unit 600b may also be configured to aggregate the statistical information over a time period by determining at least one of: a mean value, a median value, a maximum value, a minimum value, and a standard deviation, of the amount or percentage of radio resources utilized for Scell traffic over the time period. The scheduling entity 600g may be implemented in the network node 600 as shown or in another node, not shown, controlling the radio communication to and from the network node. The network node may be a base station or similar.

It should be noted that Fig. 6 illustrates some possible functional units in the network node 600 and the skilled person is able to implement these functional units in practice using suitable software and hardware. Thus, the solution is generally not limited to the shown structures of the network node 600, and the functional units 600a-g may be configured to operate according to any of the features described in this disclosure, where appropriate.

The embodiments and features described herein may be implemented in a computer program comprising computer readable code which, when run on a network node, causes the network node to perform the above actions e.g. as described for Figs 3 to 5. Further, the above-described embodiments may be implemented in a computer program product comprising a computer readable medium on which a computer program is stored. The computer program product may be a compact disc or other carrier suitable for holding the computer program. The computer program comprises computer readable code which, when run on a first radio node, causes the network node 600 to perform the above actions. Some examples of how the computer program and computer program product can be realized in practice are outlined below.

The functional units 600a-g described above for Fig 6 may be implemented in the network node 600 by means of program modules of a respective computer program comprising code means which, when run by a processor "P" causes the network node 600 to perform the above-described actions and procedures. The processor P may comprise a single Central Processing Unit (CPU), or could comprise two or more processing units. For example, the processor P may include a general purpose microprocessor, an instruction set processor and/or related chips sets and/or a special purpose microprocessor such as an Application Specific Integrated Circuit (ASIC). The processor P may also comprise a storage for caching purposes.

Each computer program may be carried by a computer program product in the network node 600 in the form of a memory "M" having a computer readable medium and being connected to the processor P. The computer program product or memory M thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the network node 600.

It will now be described, with reference to the flow chart in Fig. 7, how an O&M node may operate when the solution is used in a network node according to one or more of the above-described embodiments. In this example, the O&M node is serving a radio network and Fig. 7 illustrates a procedure performed by the O&M node for evaluating performance of the radio network in radio communication between wireless devices and a network node of the radio network. It is assumed that the network node employs carrier aggregation with multiple carriers used in corresponding multiple cells.

A first **action 700** illustrates that the O&M node obtains a measured performance of the radio network, e.g. from the network node and/or other parts of the radio network. Some examples of how the performance of the radio network may be measured have been given above. The O&M node then receives statistical information reported from the network node regarding utilization of radio resources in the radio communication, in a further **action 702,** which basically corresponds to the above action 302 performed by the network node in Fig. 3. The reported and received statistical information thus indicates secondary cell use of radio resources in a particular cell in the radio communication.

In another **action 704,** the O&M node uses the statistical information for performing evaluation of how the measured performance of the radio network is related to secondary cell usage, basically corresponding to action 304. In particular, the O&M node is able to get knowledge about whether the secondary cell usage in carrier aggregation has been successful for improving the network performance or not since this usage can be correlated to the measured performance of the radio network by means of the reported statistical information. An **action 706** finally illustrates that the O&M node configures radio resources for the network node based on the evaluation made in action 704. For example, if the evaluation indicates that the secondary cell usage in a certain cell has been successful for improving the network performance, the O&M node may configure radio resources for Scell traffic in that cell of the network node for a forthcoming radio communication since the secondary cell usage in that cell has proved to be successful.

A detailed but non-limiting example of how an O&M node may be structured with some possible functional units to bring about the above-described operation of the O&M node, is illustrated by the block diagram in Fig. 8. In this figure, the O&M node 800 is arranged for serving a radio network 802 and for evaluating performance of the radio network in radio communication between wireless devices and a network node 802a of the radio network. Again, it is assumed that the network node 802a employs carrier aggregation with multiple carriers used in corresponding multiple cells, e.g. as described above for Figs 3 and 4. The O&M node 800 may be arranged to operate according to any of the examples and embodiments of employing the solution as described above and as follows.

The O&M node 800 comprises an **obtaining unit 800a** arranged to obtain a measured performance "P" of the radio network 802, which may be obtained by various measurements made by one or more network nodes in the radio network 802. The O&M node 800 further comprises a **communication circuitry 800b** arranged to receive statistical information "SI" from the network node 802a regarding utilization of radio resources in the radio communication. The statistical information indicates secondary cell use of radio resources in a particular cell of the multiple cells in the radio communication. In practice, the above functionality in the obtaining unit 800a and in the communication circuitry 800b may be implemented in a common unit or circuitry adapted for communication with network nodes such as node 802a.

The O&M node 800 also comprises a **logic unit 800c** arranged to use the statistical information SI for performing evaluation of how the measured performance P of the radio network is related to secondary cell usage. Finally, the O&M node 800 further comprises a **configuring unit 800d** arranged to configure radio resources "RR" for the network node 802a based on the performed evaluation.

It was mentioned above that the statistical information may indicate the utilization of radio resources separately for different QoS classes, and that a procedure is known for calculating PRB usage per QoS class on the MAC protocol layer. This calculating procedure is outlined in the following tables 1-5, which may be used when the solution described herein is implemented. Below, L1 denotes Layer 1, QCI denotes a QoS Class Indicator, TTI denotes a Transmission Time Interval and eNB denotes a network node.

**Calculation of total PRB usage:**

Table 1

| Definition | Total PRB usage is calculated in the time-frequency domain only. The reference point is the Service Access Point between MAC and L1. The measurement is done separately for:<br>- downlink<br>- uplink<br>Detailed Definitions:<br><br>$$M(T) = \left\lfloor \frac{M1(T)}{P(T)} * 100 \right\rfloor ,$$<br><br>where explanations can be found in the table 2 below. |
|---|---|

Table 2

| $M(T)$ | Total PRB usage. Percentage of PRBs used, averaged during time period $T$. Value range: 0-100% |
|---|---|
| $M1(T)$ | A count of full physical resource blocks. For the downlink, all PRBs used for transmission shall be included. For the uplink, all PRBs allocated for transmission shall be included. |
| $P(T)$ | Total number of PRBs available during time period $T$. For an eNB serving one or more RNs, all PRBs regardless of RN subframe configurations shall be counted. (NOTE) |
| $T$ | The time period during which the measurement is performed. |

**Calculation of PRB usage per traffic class:**

Table 3

| Definition | PRB usage per traffic class. This measurement is an aggregate for all devices in a cell, and is applicable to Dedicated Traffic Channels (DTCH). The reference point is the Service Access Point between MAC and L1. The measurement is done separately for:<br>- downlink DTCH, for each QCI.<br>- uplink DTCH, for each QCI Detailed<br>Definitions: |
|---|---|

(continued)

$$M1(qci,T) = \sum_{\forall t} \sum_{\forall p \in S(t)} \frac{1}{W(p)} * X(t) * \frac{B(t,qci)}{B(t)} ,$$ where explanations can be found in the table 4 below.

$$M(qci) = \left\lfloor \frac{M1(qci,T)}{P(T)} * 100 \right\rfloor ,$$ where explanations can be found in the table 5 below.

Table 4

| $M1(qci,T)$ | Absolute PRB usage per traffic class. A count of full or partial physical resource blocks. |
|---|---|
| $T$ | The time period during which the measurement is performed (in TTIs) |
| $t$ | A transport block in time period $T$ that contain DTCH data. Initial transmissions and HARQ retransmissions shall be counted. |
| $S(t)$ | The set of physical resource blocks used for transmission of transport block $t$. |
| $W(p)$ | The number of transport blocks that are currently sharing PRB $p$. |
| $B(t,qci)$ | The total number of DTCH bits for DTCHs with QCI = $qci$, carried in transport block $t$ |
| $B(t)$ | The total number of DTCH and DCCH bits carried in transport block $t$. |
| $X(t)$ | If multiplexing is taken into account: $X(t) = 1$ always. If multiplexing is not taken into account: $X(t) = 1$ if transport block $t$ carries data corresponding to only one QCI and: $X(t) = 0$ otherwise. It is up to implementation if to take multiplexing into account or not. |

Table 5

| $M(qci)$ | PRB usage per traffic class. Percentage of PRBs used for a certain qci, averaged during time period $T$. Value range: 0-100% |
|---|---|
| $P(T)$ | Total number of PRBs available during time period $T$. In an eNB serving one or more RNs, all PRBs regardless of RN subframe configurations shall be counted. (NOTE) |

The radio resource utilization indicated in the above-described statistical information may be analyzed by the O&M node both with respect to SCell traffic usage as well as total traffic usage. The embodiments described herein thus introduce information about secondary cell usage which is reported to the O&M node. The usage of radio resource can also be separated and measured per service class and QoS class. The usage of radio resources can be expressed in absolute terms or in relation to a capacity, either as a fraction, quotient, ratio or percentage, as described above in connection with action 300 of Fig. 3.

Retrieving the above statistical information may be realized in practice by retrieving information about radio resource usage from a scheduling entity and aggregating the information, which has also been described above. Some useful examples of how this information may be represented in practice are given below:

- RPU.PrbDISCell.QCI, which indicates the downlink PRB Usage per QCI for SCell traffic to wireless devices in this cell.

- RPU.PrbUISCell.QCI, which indicates the uplink PRB Usage per QCI for SCell traffic from wireless devices in this cell.

- RPU.PrbTotDISCell, which indicates the total downlink PRB Usage for SCell traffic to wireless devices in this cell.

- RPU.PrbTotUISCell, which indicates the total uplink PRB Usage for SCell traffic from wireless devices in this cell.

While the solution has been described with reference to specific exemplary embodiments, the description is generally only intended to illustrate the inventive concept and should not be taken as limiting the scope of the solution. For example, the terms "network node", "wireless device", "O&M node", "Pcell", Scell", "radio resource" and "statistical information" have been used throughout this description, although any other corresponding entities, functions, and/or parameters could also be used having the features and characteristics described here.

**Claims**

1. A method performed by a network node (400, 500, 600) of a radio network, wherein the network node is a radio access node in a radio network and is configured to communicate uplink and downlink radio signals with wireless devices, the method being performed for supporting evaluation of performance of the radio network in radio communication between wireless devices (402, 602) and the network node, wherein the network node employs carrier aggregation with multiple carriers used in corresponding multiple cells, the method comprising:

    - retrieving (300) statistical information regarding utilization of radio resources in the radio communication, wherein the statistical information indicates secondary cell use of radio resources in a particular cell in the radio communication, and
    - reporting (302) the statistical information to an Operation and Maintenance, O&M, node (404, 604, 800) serving the radio network,

    wherein the statistical information indicates at least one of:

    - an amount of radio resources utilized for secondary cell, Scell, traffic out of a total amount of available radio resources,
    - an amount of radio resources utilized for primary cell, Pcell, traffic out of a total amount of available radio resources,
    - a percentage of radio resources utilized for Scell traffic relative a total amount of available radio resources, and
    - a ratio between an amount of radio resources utilized for Scell traffic and an amount of radio resources utilized for Pcell traffic.

2. A method according to claim 1, wherein the statistical information indicates the utilization of radio resources separately for different Quality of Service, QoS, classes.

3. A method according to claim 1 or 2, further comprising retrieving the statistical information for uplink communication and downlink communication separately.

4. A method according to any of claims 1 to 3, wherein the statistical information is retrieved from a scheduling entity associated with the network node.

5. A method according to any of claims 1 to 4, further comprising aggregating the statistical information over a time period by determining at least one of: a mean value, a median value, a maximum value, a minimum value, and a standard deviation, of the amount or percentage of radio resources utilized for Scell traffic over the time period.

6. A method according to any of claims 1 to 5, wherein the network node is a base station.

7. A method performed by an Operation and Maintenance, O&M, node (404, 604, 800) serving a radio network (802), for evaluating performance of the radio network in radio communication between wireless devices (402, 602) and a network node (400, 600, 802a) of the radio network, wherein the network node is a radio access node in a radio network and is configured to communicate uplink and downlink radio signals with wireless devices and employs carrier aggregation with multiple carriers used in corresponding multiple cells, the method comprising:

    - obtaining (700) a measured performance of the radio network,
    - receiving (702) statistical information, SI, from the network node regarding utilization of radio resources in the radio communication, wherein the SI indicates secondary cell use of radio resources in a particular cell in the radio communication,
    - using (704) the SI for performing evaluation of how the measured performance of the radio network is related to secondary cell usage, and

- configuring (706) radio resources, RR, for the network node based on said evaluation,

wherein the SI indicates at least one of:

- an amount of radio resources utilized for secondary cell, Scell, traffic out of a total amount of available radio resources,
- an amount of radio resources utilized for primary cell, Pcell, traffic out of a total amount of available radio resources,
- a percentage of radio resources utilized for Scell traffic relative a total amount of available radio resources, and
- a ratio between an amount of radio resources utilized for Scell traffic and an amount of radio resources utilized for Pcell traffic.

8. A computer-readable medium comprising code portions (m) which, when executed on a processor (P), configure the processor to perform all steps of a method according to any one of the preceding method claims.

9. A network node (600) of a radio network, wherein the network node is a radio access node in a radio network and is configured to communicate uplink and downlink radio signals with wireless devices, the network node being arranged for supporting evaluation of performance of the radio network in radio communication between wireless devices (602) and the network node when employing carrier aggregation with multiple carriers used in corresponding multiple cells, the network node comprising:

- a processing unit (600b) configured to retrieve statistical information regarding utilization of radio resources in the radio communication, wherein the statistical information indicates secondary cell use of radio resources in a particular cell in the radio communication, and
- a communication circuitry (600e) configured to report the statistical information to an Operation and Maintenance, O&M, node (604) serving the radio network,

wherein the statistical information indicates at least one of:

- an amount of radio resources utilized for secondary cell, Scell, traffic out of a total amount of available radio resources,
- an amount of radio resources utilized for primary cell, Pcell, traffic out of a total amount of available radio resources,
- a percentage of radio resources utilized for Scell traffic relative a total amount of available radio resources, and
- a ratio between an amount of radio resources utilized for Scell traffic and an amount of radio resources utilized for Pcell traffic.

10. A network node (600) according to claim 9, wherein the statistical information indicates the utilization of radio resources separately for different Quality of Service, QoS, classes.

11. A network node (600) according to claim 9 or 10, wherein the processing unit (600b) is configured to retrieve the statistical information for uplink communication and downlink communication separately.

12. A network node (600) according to any of claims 9 to 11, wherein the processing unit (600b) is configured to retrieve the statistical information from a scheduling entity (600g) associated with the network node.

13. A network node (600) according to any of claims 9 to 12, wherein the processing unit (600b) is configured to aggregate the statistical information over a time period by determining at least one of: a mean value, a median value, a maximum value, a minimum value, and a standard deviation, of the amount or percentage of radio resources utilized for Scell traffic over the time period.

14. A network node (600) according to any of claims 9 to 13, wherein the network node is a base station.

15. An Operation and Maintenance, O&M, node (800), arranged for serving a radio network (802) and for evaluating performance of the radio network in radio communication between wireless devices (402, 602) and a network node (400, 600, 802a) of the radio network, wherein the network node is a radio access node in a radio network and is configured to communicate uplink and downlink radio signals with wireless devices and employs carrier aggregation with multiple carriers used in corresponding multiple cells, the O&M node comprising:

- an obtaining unit (800a) arranged to obtain a measured performance of the radio network,
- a communication circuitry (800b) arranged to receive statistical information, SI, from the network node regarding utilization of radio resources in the radio communication, wherein the SI indicates secondary cell use of radio resources in a particular cell in the radio communication,
- a logic unit (800c) arranged to use the SI for performing evaluation of how the measured performance of the radio network is related to secondary cell usage, and
- a configuring unit (800d) arranged to configure radio resources for the network node based on said evaluation,

wherein the SI indicates at least one of:

- an amount of radio resources utilized for secondary cell, Scell, traffic out of a total amount of available radio resources,
- an amount of radio resources utilized for primary cell, Pcell, traffic out of a total amount of available radio resources,
- a percentage of radio resources utilized for Scell traffic relative a total amount of available radio resources, and
- a ratio between an amount of radio resources utilized for Scell traffic and an amount of radio resources utilized for Pcell traffic.

**Patentansprüche**

1. Verfahren, das durch einen Netzwerkknoten (400, 500, 600) eines Funknetzes durchgeführt wird, wobei der Netzwerkknoten ein Funkzugangsknoten in einem Funknetz ist und konfiguriert ist, Uplink- und Downlink-Funksignale mit drahtlosen Vorrichtungen zu kommunizieren, wobei das Verfahren zur Unterstützung einer Auswertung einer Leistung des Funknetzes in Funkkommunikation zwischen drahtlosen Vorrichtungen (402, 602) und dem Netzwerkknoten durchgeführt wird, wobei der Netzwerkknoten eine Trägeraggregation mit mehreren Trägern anwendet, die in entsprechenden mehreren Zellen verwendet werden, das Verfahren umfassend:

   - Abrufen (300) statistischer Informationen bezüglich einer Nutzung von Funkressourcen in der Funkkommunikation, wobei die statistischen Informationen eine Sekundärzellverwendung von Funkressourcen in einer bestimmten Zelle in der Funkkommunikation angeben, und
   - Melden (302) der statistischen Informationen an einen Betriebs- und Wartungs-, O&M (Operation and Maintenance), Knoten (404, 604, 800), der das Funknetz bedient,

   wobei die statistischen Informationen mindestens eines angeben von:

   - einer Menge an Funkressourcen, die für Sekundärzellen-, Scell, Verkehr benutzt werden, aus einer Gesamtmenge verfügbarer Funkressourcen,
   - einer Menge an Funkressourcen, die für Primärzellen-, Pcell, Verkehr benutzt werden, aus einer Gesamtmenge verfügbarer Funkressourcen,
   - einem Prozentsatz von Funkressourcen, die für Scell-Verkehr benutzt werden, relativ zu einer Gesamtmenge verfügbarer Funkressourcen und
   - einem Verhältnis zwischen einer Menge an Funkressourcen, die für Scell-Verkehr benutzt werden, und einer Menge an Funkressourcen, die für Pcell-Verkehr benutzt werden.

2. Verfahren nach Anspruch 1, wobei die statistischen Informationen die Nutzung von Funkressourcen separat für verschiedene Dienstgüte-, QoS (Quality of Service), Klassen angeben.

3. Verfahren nach Anspruch 1 oder 2, ferner umfassend ein getrenntes Abrufen der statistischen Informationen für Uplink-Kommunikation und Downlink-Kommunikation.

4. Verfahren nach einem der Ansprüche 1 bis 3, wobei die statistischen Informationen von einer Planungseinheit abgerufen werden, die mit dem Netzwerkknoten verknüpft ist.

5. Verfahren nach einem der Ansprüche 1 bis 4, ferner umfassend ein Aggregieren der statistischen Informationen über einen Zeitraum durch Bestimmen von zumindest einem von: einem Mittelwert, einem Medianwert, einem Maximalwert, einem Minimalwert und einer Standardabweichung der Menge oder des Prozentsatzes an Funkressourcen, die für Scell-Verkehr über den Zeitraum benutzt werden.

**6.** Verfahren nach einem der Ansprüche 1 bis 5, wobei der Netzwerkknoten eine Basisstation ist.

**7.** Verfahren, das von einem Betriebs- und Wartungs-, O&M, Knoten (404, 604, 800), der ein Funknetz (802) bedient, zum Auswerten einer Leistung des Funknetzes in Funkkommunikation zwischen drahtlosen Vorrichtungen (402, 602) und einem Netzwerkknoten (400, 600, 802a) des Funknetzes durchgeführt wird, wobei der Netzwerkknoten ein Funkzugangsknoten in einem Funknetz ist und konfiguriert ist, Uplink- und Downlink-Funksignale mit drahtlosen Vorrichtungen zu kommunizieren, und eine Trägeraggregation mit mehreren Trägern anwendet, die in entsprechenden mehreren Zellen verwendet werden, das Verfahren umfassend:

- Erhalten (700) einer gemessenen Leistung des Funknetzes,
- Empfangen (702) statistischer Informationen, SI, vom Netzwerkknoten bezüglich Nutzung von Funkressourcen in der Funkkommunikation, wobei die SI eine Sekundärzellenverwendung von Funkressourcen in einer bestimmten Zelle in der Funkkommunikation angeben,
- Verwenden (704) der SI zum Durchführen einer Auswertung, wie die gemessene Leistung des Funknetzes mit einer Sekundärzellnutzung in Zusammenhang steht, und
- Konfigurieren (706) von Funkressourcen, RR, für den Netzwerkknoten auf Basis der Auswertung,

wobei die SI mindestens eines angeben von:

- einer Menge an Funkressourcen, die für Sekundärzellen-, Scell, Verkehr benutzt werden, aus einer Gesamtmenge verfügbarer Funkressourcen,
- einer Menge an Funkressourcen, die für Primärzellen-, Pcell, Verkehr benutzt werden, aus einer Gesamtmenge verfügbarer Funkressourcen,
- einem Prozentsatz von Funkressourcen, die für Scell-Verkehr benutzt werden, relativ zu einer Gesamtmenge verfügbarer Funkressourcen und
- einem Verhältnis zwischen einer Menge an Funkressourcen, die für Scell-Verkehr benutzt werden, und einer Menge an Funkressourcen, die für Pcell-Verkehr benutzt werden.

**8.** Computerlesbares Medium, umfassend Codeabschnitte (m), die, wenn sie auf einem Prozessor (P) ausgeführt werden, den Prozessor konfigurieren, alle Schritte eines Verfahrens nach einem der vorangehenden Verfahrensansprüche durchzuführen.

**9.** Netzwerkknoten (600) eines Funknetzes, wobei der Netzwerkknoten ein Funkzugangsknoten in einem Funknetz ist und konfiguriert ist, Uplink- und Downlink-Funksignale mit drahtlosen Vorrichtungen zu kommunizieren, wobei der Netzwerkknoten zur Unterstützung einer Auswertung einer Leistung des Funknetzes in Funkkommunikation zwischen drahtlosen Vorrichtungen (602) und dem Netzwerkknoten angeordnet ist, wenn eine Trägeraggregation mit mehreren Trägern angewendet wird, die in entsprechenden mehreren Zellen verwendet werden, der Netzwerkknoten umfassend:

- eine Verarbeitungseinheit (600b), die zum Abrufen statistischer Informationen bezüglich einer Nutzung von Funkressourcen in der Funkkommunikation konfiguriert ist, wobei die statistischen Informationen eine Sekundärzellverwendung von Funkressourcen in einer bestimmten Zelle in der Funkkommunikation angeben, und
- einen Kommunikationsschaltkreis (600e), der zum Melden der statistischen Informationen an einen Betriebs- und Wartungs-, O&M, Knoten (604) konfiguriert ist, der das Funknetz bedient,

wobei die statistischen Informationen mindestens eines angeben von:

- einer Menge an Funkressourcen, die für Sekundärzellen-, Scell, Verkehr benutzt werden, aus einer Gesamtmenge verfügbarer Funkressourcen,
- einer Menge an Funkressourcen, die für Primärzellen-, Pcell, Verkehr benutzt werden, aus einer Gesamtmenge verfügbarer Funkressourcen,
- einem Prozentsatz von Funkressourcen, die für Scell-Verkehr benutzt werden, relativ zu einer Gesamtmenge verfügbarer Funkressourcen und
- einem Verhältnis zwischen einer Menge an Funkressourcen, die für Scell-Verkehr benutzt werden, und einer Menge an Funkressourcen, die für Pcell-Verkehr benutzt werden.

**10.** Netzwerkknoten (600) nach Anspruch 9, wobei die statistischen Informationen die Nutzung von Funkressourcen separat für verschiedene Dienstgüte-, QoS, Klassen angeben.

**11.** Netzwerkknoten (600) nach Anspruch 9 oder 10, wobei die Verarbeitungseinheit (600b) konfiguriert ist, die statistischen Informationen für Uplink-Kommunikation und Downlink-Kommunikation separat abzurufen.

**12.** Netzwerkknoten (600) nach einem der Ansprüche 9 bis 11, wobei die Verarbeitungseinheit (600b) konfiguriert ist, die statistischen Informationen von einer Planungseinheit (600g) abzurufen, die mit dem Netzwerkknoten verknüpft ist.

**13.** Netzwerkknoten (600) nach einem der Ansprüche 9 bis 12, wobei die Verarbeitungseinheit (600b) konfiguriert ist, die statistischen Informationenüber einen Zeitraum zu aggregieren, durch Bestimmen von zumindest einem von: einem Mittelwert, einem Medianwert, einem Maximalwert, einem Minimalwert und einer Standardabweichung der Menge oder des Prozentsatzes an Funkressourcen, die für Scell-Verkehr über den Zeitraum benutzt werden.

**14.** Netzwerkknoten (600) nach einem der Ansprüche 9 bis 13, wobei der Netzwerkknoten eine Basisstation ist.

**15.** Betriebs- und Wartungs-, O&M, Knoten (800), der zum Bedienen eines Funknetzes (802) und zum Auswerten einer Leistung des Funknetzes in Funkkommunikation zwischen drahtlosen Vorrichtungen (402, 602) und einem Netzwerkknoten (400, 600, 802a) des Funknetzes angeordnet ist, wobei der Netzwerkknoten ein Funkzugangsknoten in einem Funknetz ist und konfiguriert ist, Uplink- und Downlink-Funksignale mit drahtlosen Vorrichtungen zu kommunizieren, und eine Trägeraggregation mit mehreren Trägern anwendet, die in entsprechenden mehreren Zellen verwendet werden, der O&M-Knoten umfassend:

- eine Erlangungseinheit (800a), die angeordnet ist, eine gemessene Leistung des Funknetzes zu erhalten,
- einem Kommunikationsschaltkreis (800b), der angeordnet ist, statistische Informationen, SI, bezüglich einer Nutzung von Funkressourcen in der Funkkommunikation vom Netzwerkknoten zu empfangen, wobei die SI eine Sekundärzellenverwendung von Funkressourcen in einer bestimmten Zelle in der Funkkommunikation angeben,
- eine Logikeinheit (800c), die zum Verwenden der SI zum Durchführen einer Auswertung angeordnet ist, wie die gemessene Leistung des Funknetzes mit einer Sekundärzellnutzung in Zusammenhang steht, und
- eine Konfigurationseinheit (800d), die zum Konfigurieren von Funkressourcen für den Netzwerkknoten auf Basis der Auswertung angeordnet ist,

wobei die SI mindestens eines angeben von:

- einer Menge an Funkressourcen, die für Sekundärzellen-, Scell, Verkehr benutzt werden, aus einer Gesamtmenge verfügbarer Funkressourcen,
- einer Menge an Funkressourcen, die für Primärzellen-, Pcell, Verkehr benutzt werden, aus einer Gesamtmenge verfügbarer Funkressourcen,
- einem Prozentsatz von Funkressourcen, die für Scell-Verkehr benutzt werden, relativ zu einer Gesamtmenge verfügbarer Funkressourcen und
- einem Verhältnis zwischen einer Menge an Funkressourcen, die für Scell-Verkehr benutzt werden, und einer Menge an Funkressourcen, die für Pcell-Verkehr benutzt werden.

**Revendications**

**1.** Procédé effectué par un noeud de réseau (400,500,600) d'un réseau radio, dans lequel le noeud de réseau est un noeud d'accès radio dans un réseau radio et est configuré pour communiquer des signaux radio en liaison montante et liaison descendante avec le dispositif sans fil, le procédé étant effectué pour prendre en charge une évaluation des performances du réseau radio dans une communication radio entre le dispositif sans fil (402,602) et le noeud de réseau, dans lequel le noeud de réseau emploie une agrégation de porteuses avec des porteuses multiples utilisées dans des cellules multiples correspondantes, le procédé comprenant de :

- extraire (300) une information statistique concernant l'utilisation des ressources radio dans la communication radio dans lequel l'information statistique indique une utilisation par cellule secondaire des ressources radio dans une cellule particulière dans la communication radio, et
- rapporter (302) l'information statistique à un noeud d'exploitation et maintenance, O&M, (404,604,800) desservant le réseau radio,

dans lequel l'information statistique indique au moins un de :

- une quantité de ressources radio utilisées pour un trafic de cellule secondaire, Scell, parmi une quantité totale de ressources radio disponibles,
- une quantité de ressources radio utilisées pour un trafic de cellule primaire, Pcell, parmi une quantité totale de ressources radio disponibles,
- un pourcentage de ressources radio utilisées pour un trafic Scell relatif à une quantité totale de ressources radio disponibles, et
- un rapport entre une quantité de ressources radio utilisées pour un trafic Scell et une quantité de ressources radio utilisées pour un trafic Pcell.

2. Procédé selon la revendication 1, dans lequel l'information statistique indique l'utilisation de ressources radio séparément pour différentes classes de qualité de service, QoS.

3. Procédé selon la revendication 1 ou 2, comprenant en outre d'extraire l'information statistique pour une communication en liaison montante et une communication en liaison descendante séparément.

4. Procédé selon une quelconque des revendications 1 à 3, dans lequel l'information statistique est extraite d'une entité de programmation associée au noeud de réseau.

5. Procédé selon une quelconque des revendications 1 à 4, comprenant en outre d'agréger l'information statistique sur une période de temps en déterminant au moins une de : une valeur moyenne, une valeur médiane nulle, une valeur maximale, une valeur minimale et un écart standard, de la quantité ou du pourcentage de ressource radio utilisées pour le trafic Scell sur la période temporelle.

6. Procédé selon une quelconque des revendications 1 à 5, dans lequel le noeud de réseau est une station de base.

7. Procédé effectué par un noeud d'exploitation et maintenance, O&M (404,604,800) desservant un réseau radio (802), pour évaluer une performance du réseau radio en communication radio entre des dispositifs sans fil (402,602) et un noeud de réseau (400,600,802a) du réseau radio, dans lequel le noeud de réseau est un noeud d'accès radio dans un réseau radio et est configuré pour communiquer des signaux radio en liaison montante et liaison descendante avec des dispositifs sans fil et emploie une agrégation de porteuses avec des porteuses multiples utilisés dans des cellules multiples correspondantes, le procédé comprenant de :

- obtenir (700) une performance mesurée du réseau radio ;
- recevoir (702) une information statistique, SI, provenant du noeud de réseau concernant l'utilisation des ressources radio dans la communication radio, dans lequel le SI indique une utilisation de cellule secondaire des ressources radio dans une cellule particulière dans la communication radio,
- utiliser (704) le SI pour effectuer l'évaluation indiquant comment la performance mesurée du réseau radio est relative à l'utilisation de cellule secondaire, et
- configurer (706) les ressources radio, RR, pour le noeud de réseau sur la base de ladite évaluation,

dans lequel le SI indique au moins un de :

- une quantité de ressources radio utilisées pour un trafic de cellule secondaire, Scell, parmi une quantité totale de ressources radio disponibles,
- une quantité de ressources radio utilisées pour un trafic de cellule primaire, Pcell, parmi une quantité totale de ressources radio disponibles,
- un pourcentage de ressources radio utilisé pour un trafic Scell relatif à une quantité totale de ressources radio disponibles, et
- un rapport entre une quantité de ressources radio utilisées pour un trafic Scell et une quantité de ressources radio utilisées pour un trafic Pcell.

8. Support lisible par ordinateur comprenant des portions de code (m) qui, lorsqu'elles sont exécutées sur un processeur (P), configurent le processeur afin d'effectuer toutes les étapes d'un procédé selon une quelconque des revendications de procédé précédente.

9. Noeud de réseau (600) d'un réseau radio, dans lequel le noeud de réseau est un noeud d'accès radio dans un réseau radio et est configuré pour communiquer des signaux radios de liaison montante et liaison descendante avec des dispositifs sans fil, le réseau étant agencé pour prendre en charge une évaluation de performance du réseau radio en communication radio entre des dispositifs sans fil (602) et le noeud de réseau lorsqu'il emploie une agrégation de porteuses avec des porteuses multiples utilisées dans des cellules multiples correspondantes, le noeud de réseau comprenant :

- une unité de traitement (600b) configurée pour extraire une information statistique concernant l'utilisation des ressources radio dans la communication radio dans lequel l'information statistique indique une utilisation par cellule secondaire des ressources radio dans une cellule particulière dans la communication radio, et
- un circuit de communication (600e) configuré pour rapporter l'information statistique à l'exploitation et maintenance, O&M, (604) desservant le réseau radio,

dans lequel l'information statistique indique que au moins un de :

- une quantité de ressources radio utilisées pour un trafic de cellule secondaire, Scell, parmi une quantité totale de ressources radio disponibles,
- une quantité de ressources radio utilisées pour un trafic de cellule primaire, Pcell, parmi une quantité totale de ressources radio disponibles,
- un pourcentage de ressources radio utilisées pour un trafic Scell relatif à une quantité totale de ressources radio disponibles, et
- un rapport entre une quantité de ressources radio utilisées pour un trafic Scell et une quantité de ressources radio utilisées pour un trafic Pcell.

10. Noeud de réseau (600) selon la revendication 9, dans lequel l'information statistique indique l'utilisation de ressources radio séparément pour différentes classes de qualité de service, QoS.

11. Noeud de réseau (600) selon la revendication 9 ou 10, dans lequel l'unité de traitement (600b) est configurée pour extraire l'information statistique pour une communication en liaison montante et une communication en liaison descendante séparément.

12. Noeud de réseau (600) selon une quelconque des revendications 9 à 11, dans lequel l'unité de traitement (600b) est configurée pour extraire l'information statistique d'une entité de programmation (600g) associée au noeud de réseau.

13. Noeud de réseau (600) selon une quelconque des revendications 9 à 12, dans lequel l'unité de traitement (600b) est configurée pour agréger l'information statistique sur une période de temps en déterminant au moins une de : une valeur moyenne, une valeur médiane nulle, une valeur maximale, une valeur minimale et un écart standard, de la quantité ou du pourcentage de ressource sradio utilisées pour le trafic Scell sur la période temporelle.

14. Noeud de réseau (600) selon une quelconque des revendications 9 à 13, dans lequel le noeud de réseau est une station de base.

15. Noeud d'exploitation et maintenance O&M (800), agencé pour desservir un réseau radio (802) et pour évaluer les performances du réseau radio dans une communication radio entre des dispositifs sans fil (402,602) et un noeud de réseau (400,600,802a) du réseau radio, dans lequel le noeud de réseau est un noeud d'accès radio dans un réseau radio et est configuré pour communiquer des signaux radio en liaison montante et en liaison descendante avec des dispositifs sans fil et emploie une agrégation de porteuses avec des porteuses multiples utilisées dans des cellules multiples correspondantes, le noeud O&M comprenant :

- une unité d'obtention (800a) agencée pour obtenir une performance mesurée du réseau radio ;
- un circuit de communication (800b) agencé pour recevoir une information statistique, SI, provenant du noeud de réseau concernant l'utilisation des ressources radio dans la communication radio, dans lequel le SI indique une utilisation de cellule secondaire des ressources radio dans une cellule particulière dans la communication radio,
- une unité logique (800c) agencée pour utiliser le SI pour effectuer l'évaluation indiquant comment la performance mesurée du réseau radio est relative à l'utilisation de cellule secondaire, et
- une unité de configuration (800d) agencée pour configurer les ressources radio, RR, pour le noeud de réseau sur la base de ladite évaluation,

dans lequel le SI indique au moins un de :

- une quantité de ressources radio utilisées pour un trafic de cellule secondaire, Scell, parmi une quantité totale de ressources radio disponibles,
- une quantité de ressources radio utilisées pour un trafic de cellule primaire, Pcell, parmi une quantité totale de ressources radio disponibles,
- un pourcentage de ressources radio utilisées pour un trafic Scell relatif à une quantité totale de ressources radio disponibles, et
- un rapport entre une quantité de ressources radio utilisées pour un trafic Scell et une quantité de ressources radio utilisées pour un trafic Pcell.

O&M

102 — Network Manager

100A — Domain Manager

100B — Domain Manager ...

104

104

104

Fig. 1

CC1

CC2

CC3

200

202

Pcell 1

Scell 2

Scell 3

...

Fig. 2

300 | The network node retrieves statistical information indicating secondary cell use of radio resources in a particular cell

302 | The network node reports the statistical information to O&M node

304 | The O&M node uses the statistical information for evaluating how measured performance relates to secondary cell usage

Fig. 3

404 O&M Node(s)

**4:6** Evaluate performance

**4:3** Performance measurements

**4:5** Statistical info

**4:7** Configure

400

Network Node

**4:1** Resource utilization

**4:4** Aggregate

402

**4:2** Measure performance

Cell 1

Cell 2

Cell 3

Fig. 4

504

500  Network Node

IP

PDCP

Measure throughput
as performance

RLC

MAC

506a

506b

PHY    PHY

Report resource
utilization Pcell, Scell

CC1
(Pcell)

CC2
(Scell)

508a

508b

502

Fig. 5

Fig. 6

700 Obtain measured performance of radio network

702 Receive from network node statistical information indicating secondary cell use of radio resources in a particular cell

704 Use the statistical information for evaluating how the measured performance relates to secondary cell usage

706 Configure radio resources for network node based on evaluation

Fig. 7

800

O&M Node

800d Configuring Unit

800c Logic Unit

800a Obtaining Unit

800b Communication Circuitry

802

P

802a

SI

RR

Fig. 8

**REFERENCES CITED IN THE DESCRIPTION**

**Patent documents cited in the description**

- WO 2012095113 A1

- EP 2239974 A2

**Non-patent literature cited in the description**

- **HUAWEI.** Consideration on CP Solution of Minimization of Drive Test. *3GPP draft R2-096600*
- **NOKIA SIEMENS NETWORKS.** Architectures comparison. *3GPP draft R2-097020*

- Management for Carrier Aggregation for LTE. *3GPP TSG SA WG5 meeting no. 78*